# EUROPEAN PATENT APPLICATION

(11) **EP 4 342 955 A1**
(43) Date of publication of application: **27.03.2024**
(21) Application number: 22887190.1
(22) Date of filing: 28.10.2022
(51) Int. Cl.: C09D 11/322, B41J 2/01, B41M 5/00, D06P 1/44, D06P 5/30

(54) **INK COMPOSITION FOR PRINTING**

(30) Priority: 28.10.2021 JP 2021176658
(71) Applicant: Kyocera Corporation, Kyoto-shi Kyoto 612-8501 (JP)
(72) Inventor: TORIYAMA, Go, Kyoto-shi, Kyoto 612-8501 (JP); SUGIMOTO, Hiroko, Kyoto-shi, Kyoto 612-8501 (JP); HOBO, Jumpei, Kyoto-shi, Kyoto 612-8501 (JP); HIOKI, Jun, Kyoto-shi, Kyoto 612-8501 (JP)
(74) Representative: Viering, Jentschura & Partner mbB Patent- und Rechtsanwälte
(86) International application number: PCT/JP2022/040461
(87) International publication number: WO 2023/074865

(57) **Abstract**

An aspect of the present disclosure relates to an ink composition for textile printing containing: a resin; a pigment; an aqueous medium; and an organic solvent, wherein the resin includes: a first resin having an elongation of 500% or more and 750% or less and a tensile strength of 25 MPa or more and 40 MPa or less; and a second resin having an elongation of 250% or more and 550% or less and a tensile strength of 55 MPa or more and 90 MPa or less.

## Description

### Technical Field

The present disclosure relates to an ink composition for textile printing.

### Background Art

Conventionally, a screen textile printing method, a roller textile printing method, and the like have been widely used as a method of executing a printing on a fabric of cotton, silk, polyester, and the like. Since these textile printing methods require preparation of a screen frame, an engraved roller, and the like for each pattern, the methods are not suitable for textile printing directed to the high-mix low-volume manufacturing. Additionally, since the methods involve discharge of a large amount of wastewater due to the need to rinse off a paste and the like, an increase in an environmental burden has become a problem. In contrast, an inkjet textile printing method only requires modification of digital data to change a pattern or a color, eliminating the need for a preparation work of a printing plate, e.g., a screen frame or an engraved roller. Therefore, the method is suitable for the high-mix low-volume manufacturing and can contribute to a significant reduction of the amount of wastewater to be discharged. Consequently, the method has been widely used in recent years.

Inkjet inks containing a pigment and resin have been already used in the inkjet textile printing method. For example, Patent Literature 1 discloses a pigment textile printing ink composition containing resin particles, water, and an organic solvent, wherein the resin particles have a glass transition temperature of 5°C or less and account for 6.5 mass% or more of the total amount of the ink composition, and the ink composition has a film elongation of 400% or more and 600% or less, and a film strength of 50 MPa or more.

### Citation List

### Patent Literature

Patent Literature 1: Japanese Unexamined Patent Publication No. 2020-104362

### Summary of Invention

An ink composition for textile printing according to an aspect of the present disclosure includes: a resin; a pigment; an aqueous medium; and an organic solvent, wherein the resin includes: a first resin having an elongation of 500% or more and 750% or less and a tensile strength of 25 MPa or more and 40 MPa or less; and a second resin having an elongation of 250% or more and 550% or less and a tensile strength of 55 MPa or more and 90 MPa or less.

### Description of Embodiments

In the invention disclosed in the above-described Patent Literature 1, the textile printing ink composition contains the resin particles mentioned above, which makes it possible to form an image well following contraction or expansion of a fabric and having an excellent abrasion resistance.

In a case of an inkjet recording used for textile printing, however, there have been demands for improvement in the fastness to rubbing, suppressed stiffness of a fabric that is the textile printing target, and improvement in smoothness or fabric texture as well as improvement in the followability. In this respect, the use of only the resin particles having predetermined film elongation and film strength has a likelihood that sufficient fastness to rubbing and texture cannot be obtained in a textile printing matter formed with an image by the ink composition.

Embodiments of the present disclosure will be specifically described hereinafter, but the present disclosure is not limited thereto.

### Textile Printing Ink Composition

A textile printing ink composition (hereinafter, sometimes also simply referred to as "ink composition") according to an embodiment of the present disclosure contains a resin, a pigment, an aqueous medium, and an organic solvent. The resin includes a first resin having an elongation of 500% or more and 750% or less and a tensile strength of 25 MPa or more and 40 MPa or less, and a second resin having an elongation of 250% or more and 550% or less and a tensile strength of 55 MPa or more and 90 MPa or less. Using this ink composition makes it possible to obtain a textile printing matter having excellent fastness to dry rubbing and fastness to wet rubbing, and to further improve the texture of a fabric that is the textile printing target.

### Resin

The resin of the present embodiment includes at least two kinds of resins. The first resin has an elongation of 500% or more and 750% or less and a tensile strength of 25 MPa or more and 40 MPa or less. The second resin has an elongation of 250% or more and 550% or less and a tensile strength of 55 MPa or more and 90 MPa or less.

The combination of the first resin having a high elongation and a relatively low tensile strength and a second resin having a relatively low elongation and a high tensile strength makes it possible to satisfy both the fastness to rubbing and the texture in the resultant textile printing matter.

In this embodiment, the "elongation" and the "tensile strength" respectively mean values measured according to a measurement method specified in Examples below.

The first resin has a more preferable elongation of 600% or more and 700% or less and a more preferable tensile strength of 35 MPa or more and 40 MPa or less.

As the first resin, a resin having the elongation and the tensile strength mentioned above may be used without a particular limitation, but it may be preferable to use a resin prepared in the state of a water-based emulsion. It may be preferable to add the resin to the ink in the state of a resin emulsion in which the resin is stably dispersed in water functioning as dispersion medium in consideration of the easiness of the operation of adjusting the ink by mixing the resin with a pigment, a solvent and water, and dispersion of the resin in the ink in the most homogeneous manner possible.

Examples of water-dispersible resin usable in the present embodiment include a polyurethane resin, a styrene-acrylic resin, a silicone resin, a polyester resin, and an acrylic resin. It may be possible to use a copolymer of a styrene-acrylic resin and a polyester resin, a copolymer of a styrene-acrylic resin and a urethane resin, and the like, which are obtained by copolymerizing two or more kinds of the above-mentioned resins.

Further, the above-mentioned resin may have a reactive functional group, or may be a polymer containing a crosslinking agent. This causes a part of the resin to cross-link and make strong bond to the fabric when a printing is done to the fabric, and increase the molecular weight and bring about curing reaction, and accomplish excellent adhesion.

Furthermore, there is likelihood that increasing the addition amount of fixing resin to increase the adhesive stability of the ink to the fabric lowers the flexibility of the fabric to which an image is printed, and causes a stiff quality, and degrades the texture. Accordingly, it may be preferable to use a resin having a molecular structure that can maintain the flexibility even after being cured, like urethane resin.

The urethane resin is not particularly limited to a specific one, but may be referred to a polyurethane resin which is obtained from a reaction between a polyol and a polyisocyanate. More specifically, for example, it may be possible to use a polymer resulting from a urethane linkage between a polyol including polypropylene glycol, polyethylene glycol, polytetramethylene glycol, poly (ethylene adipate), poly (diethylene adipate), poly (propylene adipate), poly (tetramethylene adipate), poly (hexamethylene adipate), poly-ε-caprolactone, poly (hexamethylene carbonate), silicone polyol; and an isocyanate including tolylene diisocyanate, 4,4-diphenylmethane diisocyanate, xylylene diisocyanate, naphthalene diisocyanate, hexamethylene diisocyanate, hydrogenated tolylene diisocyanate, hydrogenated 4,4-diphenylmethane diisocyanate, isophorone diisocyanate, tetramethylxylylene diisocyanate; or a block copolymer; a random copolymer; or a graft copolymer of them.

As the styrene acrylic resin, it may be possible to use a combination of one or more selected from a styrene-(meth) acrylic acid copolymer and a styrene-(meth) acrylic acid-(meth) acrylic acid ester copolymer. As the (meth) acrylic acid ester, it may be possible to use benzyl (meth) acrylate, cyclohexyl (meth) acrylate, methyl (meth) acrylate, ethyl (meth) acrylate, propyl (meth) acrylate, butyl (meth) acrylate, hexyl (meth) acrylate, octyl (meth) acrylate, lauryl (meth) acrylate, 2-ethylhexyl (meth) acrylate, 2-ethylhexyl carbitol (meth) acrylate, phenol EO-modified (meth) acrylate, isobornyl (meth) acrylate, dicyclopentenyl (meth) acrylate, dicyclopentanyl (meth) acrylate, dicyclopentenyloxyethyl (meth) acrylate, or the like.

As the silicone resin, it may be possible to use side-chain type, single-end type, dual-end type, and side-chain dual-end type modified silicone oils, or the like.

As the polyester resin, it may be possible to use a polymer resulting from an ester linkage between a dicarboxylic acid including a terephthalic acid, isophthalic acid, orthophthalic acid, 2,6-naphthalenedicarboxylic acid, sodium sulfoisophthalate, succinic acid, adipic acid, azelaic acid, sebacic acid, 1,10-decanedicarboxylic acid, and dimer acid; or a polycarboxylic acid containing three or more carboxyl groups including a trimellitic acid and a pyrollimetic acid; and a dihydric alcohol including ethylene glycol, 1,2-propylene glycol, 1,3-propylene glycol, 1,4-butanediol, 1,5-pentanediol, 1,6-hexanediol, 1,9-nonanediol, neopentyl glycol, 3-methyl-1,5-pentanediol, diethylene glycol, triethylene glycol, polytetraethylene glycol, 1,4-cyclohexanedimethanol, ethylene oxide adducts of bisphenol A; or a polyhydric alcohol containing three or more hydroxyl groups including trimethylolpropane and pentaerythritol; or a block copolymer; a random copolymer; or a graft copolymer of them.

The second resin may more preferably have an elongation of 250% or more and 300% or less, and more preferably have a tensile strength of 60 MPa or more and 90 MPa or less.

As the second resin, it may be possible to use a resin having the elongation and the tensile strength mentioned above without other particular limitations. Specifically, it may be possible to use each of the resins exemplified as the first resin.

As the first resin and the second resin, the same kind of resin or different kinds of resins may be used. In a case where the same kind of resin is used as the first resin and the second resin, the compatibility between the resins increases, which enables a uniform coating to be obtained.

In the resin contained in the ink composition according to the present embodiment, a weight ratio (the second resin / the first resin) of the second resin to the first resin is preferably substantially from 0.6 to 1.7. This makes it possible to satisfy both the fastness to rubbing and the texture, and in particular, give an excellent dry fastness to rubbing. A more preferable range of the weight ratio may be 0.8 or more and 1.2 or less.

The resin of the present embodiment may further include other resin than the first resin and the second resin to an extent not leading to impairment of the effects of the present disclosure as long as the first resin and the second resin are included.

The content of the resin (a total of the first resin and the second resin) in the ink composition of the present embodiment is 6 mass% or more, from the viewpoint of obtaining a high fastness to rubbing, and 9 mass% or less, from the viewpoint of improving the texture, with respect to the entire amount of the ink composition. The content may be more preferably 7 mass% or more and 8 mass% or less.

### Pigment

As a pigment to be mixed in the ink composition of the present embodiment, for example, it may be possible to use a dispersible pigment which can disperse and exist in water. From the viewpoint of obtaining an ink excellent in image density, hue, and color stability, the volume median diameter (D₅₀) of the pigment is preferably 30 nm or more and 250 nm or less, more preferably 70 nm or more and 160 nm or less.

In the present specification, a measured volume median diameter (D₅₀) is a median diameter which was measured using a laser diffraction/scattering particle size distribution measuring apparatus ("LA-950", manufactured by HORIBA, Ltd.).

As a pigment of the present embodiment, it may be possible to use conventionally known organic and inorganic pigments. Examples thereof include an azo pigment including an azo lake, an insoluble azo pigment, a condensed azo pigment, and a chelate azo pigment; a polycyclic pigment including a phthalocyanine pigment, a perylene and a perylene pigment, an anthraquinone pigment, a quinacridone pigment, a dioxanzine pigment, a thioindigo pigment, an isoindolinone pigment, a quinophthalone pigment; a dye lake including a basic dye lake, an acidic dye lake; an organic pigment including a nitro pigment, a nitroso pigment, aniline black, a daylight fluorescent pigment; and an inorganic pigment including carbon black.

As more specific examples of the pigment, pigments for magenta or red includes C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, and C.I. Pigment Red 222.

Pigments for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, and C.I. Pigment Yellow 138.

Pigments for green or cyan include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

The content of the pigment of the present embodiment is preferably 1 mass% or more and 12 mass% or less, and more preferably 1 mass% or more and 7 mass% or less, with respect to a mass of the entire amount of the ink composition. The content of the pigment which is 1 mass % or more improves the image density of a formed record matter. The content of the pigment which is 12 mass % or less gives an ink having high fluidity.

Further, the ink composition of the present embodiment may preferably contain an anionic pigment. This causes the anionic pigment and the cationic polymer contained in a processing solution to be used with the ink composition for textile printing to electrically react and aggregate over the surface of the recording target, thereby suppressing the resin contained in the ink from permeating into the matter subject to the textile printing. In other words, the resin can be kept from permeating into gaps between fibers and binding the fibers to each other. Consequently, the fabric texture (touch, etc.) of the textile printing target can be improved.

In the present embodiment, it may be preferable that the pigment is dispersed in a dispersion liquid containing a pigment dispersion resin to use as a pigment dispersion liquid.

Examples of the pigment dispersion resin usable in the present embodiment include an alkali-soluble resin including a styrene-acrylic acid copolymer, a styrene-acrylic acid-acrylic acid alkyl ester copolymer, a styrene-maleic acid copolymer, a styrene-maleic acid-acrylic acid alkyl ester copolymer, a styrene-methacrylic acid copolymer, a styrene-methacrylic acid-acrylic acid alkyl ester copolymer, a styrene-maleic acid half ester copolymer, a vinylnaphthalene-acrylic acid copolymer, and a vinylnaphthalene-maleic acid copolymer. These resins may be used in a single kind, or in two or more kinds in combination, as needed.

### Aqueous Medium

The aqueous medium contained in the ink composition of the present embodiment is a medium containing water as a main component. The aqueous medium may function as a solvent or as a dispersion medium. Specific examples of the aqueous medium include water and a mixed solution of water and a polar solvent. Examples of the polar solvent contained in the aqueous medium include methanol, ethanol, isopropyl alcohol, butanol, and methyl ethyl ketone.

### Organic Solvent

As the organic solvent contained in the ink composition of the present embodiment, although not limited to a particular one, there is a polyol, a glycol ether, or the like as an example.

In particular, an ink composition preferably contains a polyol because this makes it possible to suitably adjust the viscosity of the ink. As a polyol contained in the ink composition, a diol or a triol is preferable. Examples of the diol include a glycol compound, more specifically, ethylene glycol, propylene glycol, diethylene glycol, triethylene glycol, and tetraethylene glycol. Examples of the triol include glycerin.

### Additives and Manufacturing Method

The ink composition according to the present embodiment may contain a surfactant in addition to the above-mentioned essential components (resin, pigment, aqueous medium, and organic solvent). Preferable examples of the surfactant include an acetylene glycol-based surfactant and a silicone-based surfactant.

Usually, the content of the surfactant in the ink composition is preferably substantially 0.01 to 3.0 mass%, more preferably 0.1 to 1.0 mass%, with respect to the entire ink composition.

Furthermore, the ink composition of the present embodiment may further contain a known additive (more specifically, a dissolution stabilizer, a desiccation inhibitor, an antioxidant, a viscosity modifier, a pH modifier, or an antifungal agent) as necessary.

In a case that the ink composition contains a pH modifier, although not limited to a particular one, the pH modifier may include sodium hydroxide, triethanolamine, dimethylaminoethanol. The ink composition can be adjusted to have a desired pH by adding a pH modifier to the ink composition.

The content of the pH modifier in the ink composition of the present disclosure is preferably 0.01 mass% or more and 1 mass% or less, more preferably 0.05 mass% or more and 0.2 mass% or less. However, the content of the pH modifier is not limited to the above-mentioned ranges but may be properly adjusted according to a required pH of an ink composition.

The ink composition used in the present embodiment is produced, for example, by mixing a resin, a pigment, an aqueous medium, an organic solvent, and a component (for example, a surfactant) added according to necessity using a stirrer. The mixing time is, for example, one minute or more and thirty minutes or less. After mixing, the mixed liquid is centrifuged to remove coarse particles, e.g., foreign matter and dust, and filtrated to remove fine particles, whereby the ink composition of the present embodiment can be obtained.

Since the thus-obtained ink composition according to the present embodiment has physical properties adjusted for inkjet, the ink composition is particularly suitable for use in inkjet textile printing. However, the ink composition may also be used for a textile printing machine for other application than inkjet textile printing.

### Examples

Hereinafter, the present disclosure will be further specifically described by way of Examples. However, the present disclosure is not limited to the Examples.

### Example 1

### Preparation of Pigment Dispersion Liquid

A four-necked flask having a capacity of 1000 mL was set with a stirrer, a nitrogen introducing tube, a condenser (mixer), and a dropping funnel. Thereafter, 100 g of isopropyl alcohol and 300 g of methyl ethyl ketone were introduced in the flask. Subsequently, the materials in the flask were heated under reflux at a temperature of 70°C while being bubbled with nitrogen gas.

Further, 40 g of styrene (ST), 10 g of methacrylic acid (MAA), 10 g of butyl acrylate (BA), 40 g of methyl methacrylate (MMA), and 0.4 g of azobisisobutyronitrile (AIBN) were mixed to obtain a solution. The obtained solution was introduced in the dropping funnel. The solution in the dropping funnel was added dropwise in two hours to the materials in the flask being heated under reflux. After the dropping is completed, the materials in the flask were further heated under reflux for six hours.

Subsequently, 50 ml of methyl ethyl ketone containing 0.2 g of AIBN was added dropwise in fifteen minutes into the flask. After the dropping is completed, the materials in the flask were further heated under reflux for five hours. As a result, a styrene-acrylic acid-based resin having a mass average molecular weight (Mw) of 20000 and an acid value of 100 mg KOH/g was obtained.

Subsequently, 15 parts by mass of cyan pigment ("LIONOL^{®} BLUE FG-7330" manufactured by TOYOCOLOR CO., LTD., Component: copper phthalocyanine, Color index: Pigment Blue 15:3), 6 parts by mass of a resin, 0.5 parts by mass of 1,2-Octanediol, and 78.5 parts by mass of water (ion-exchanged water) were introduced in a vessel having a capacity of 0.6 L of a media type disperser ["DYNO^{®}-MILL" manufactured by Willy A. Bachofen (WAB) AG]. Sodium hydroxide (NaOH) was then added into the vessel by an amount necessary to neutralize the resin. The content of the pigment in the obtained pigment dispersion liquid was 14.5 mass%.

In the neutralization of the resin, NaOH aqueous solution was added to cause the materials in the vessel to have the pH of 8. Specifically, the vessel was added with the NaOH aqueous solution having a mass 1.1 times as much as the neutralization equivalent. The mass of Na to be added into the vessel was calculated on the basis of the mass of the resin. The mass of the water to be added into the vessel was calculated on the basis of a total of the mass of water contained in the NaOH aqueous solution and the mass of water produced by the neutralization reaction.

Subsequently, the vessel of the disperser was filled with media (zirconia beads having a diameter of 0.5 mm) by an amount occupying 70 volume% of the capacity of the vessel. Thereafter, the materials in the vessel were kneaded for 240 minutes under a condition of a temperature of 10°C and a peripheral speed of 8 m/sec by the disperser filled with the media. As a result, a pigment dispersion liquid containing a large amount of pigment particles was obtained. The volume median diameter (D₅₀) of the pigment particles contained in the pigment dispersion liquid was 100 nm. The measurement of the volume median diameter (D₅₀) of the pigment particles contained in a pigment dispersion liquid was conducted using Dynamic Light Scattering Particle Size Distribution Analyzer ("Zetasizer Nano" manufactured by Sysmex Corporation) as a measurement apparatus and a solution obtained by diluting the pigment dispersion liquid 300 times with ion-exchanged water as a measurement target.

### Mixture of Pigment Dispersion Liquid with Other Component

Subsequently, 20 parts by mass of a pigment dispersion liquid, 30 parts by mass of propylene glycol, 4 parts by mass of urethane resin "HYDRAN AP-10 (manufactured by DIC Corporation, tensile strength of 36 MPa, elongation of 520%) as a first resin, 4 parts by mass of urethane resin "ETERNACOLL UW-1527DF" (manufactured by UBE Corporation, tensile strength of 90 MPa, elongation of 270%) as a second resin, 0.5 parts by mass of nonionic surfactant ("Surfynol^{®} 420" manufactured by Nissin Chemical Industry Co., Ltd., Component: glycol compound having an acetylene group), and 3 parts by mass of ion-exchanged water were mixed to thereby mix them homogeneously at a rotation speed of 400 rpm by an agitator "Three-one Motor BL-600" manufactured by Shinto Scientific Co., Ltd.). Thereafter, the obtained mixed solution was filtrated with a filter having a pore size of 5 µm to remove foreign matter and coarse particles in the mixed solution. As a result, an ink composition of Example 1 was obtained.

### Example 2

An ink of Example 2 was obtained by using 20 parts by mass of the pigment dispersion liquid, 30 parts by mass of the propylene glycol, 4 parts by mass of urethane resin "SUPERFLEX (SF) 460" (manufactured by DKS Co. Ltd., tensile strength of 25 MPa, elongation of 750%) as a first resin, 4 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 3

An ink of Example 3 was obtained by using 20 parts by mass of the pigment dispersion liquid, 30 parts by mass of the propylene glycol, 4 parts by mass of urethane resin "SUPERFLEX 470" (manufactured by DKS Co. Ltd., tensile strength of 40 MPa, elongation of 640%) as a first resin, 4 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 4

An ink of Example 4 was obtained by using 20 parts by mass of the pigment dispersion liquid, 30 parts by mass of the propylene glycol, 4 parts by mass of the urethane resin "SUPERFLEX 470" (manufactured by DKS Co. Ltd., tensile strength of 40 MPa, elongation of 640%) as a first resin, 4 parts by mass of urethane resin "TAKELAC W-6110" (manufactured by Mitsui Chemicals, Inc., tensile strength of 55 MPa, elongation of 550%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 5

An ink of Example 5 was obtained by using 20 parts by mass of the pigment dispersion liquid, 30 parts by mass of the propylene glycol, 5 parts by mass of the urethane resin "SUPERFLEX 470" (manufactured by DKS Co. Ltd., tensile strength of 40 MPa, elongation of 640%) as a first resin, 3 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 6

An ink of Example 6 was obtained by using 20 parts by mass of the pigment dispersion liquid, 30 parts by mass of the propylene glycol, 3 parts by mass of the urethane resin "SUPERFLEX 470" (manufactured by DKS Co. Ltd., tensile strength of 40 MPa, elongation of 640%) as a first resin, 5 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 7

An ink of Example 7 was obtained by using 20 parts by mass of the pigment dispersion liquid, 30 parts by mass of the propylene glycol, 4 parts by mass of the urethane resin "SUPERFLEX 470" (manufactured by DKS Co. Ltd., tensile strength of 40 MPa, elongation of 640%) as a first resin, 4 parts by mass of urethane resin "TAKELAC W-6020" (manufactured by Mitsui Chemicals, Inc., tensile strength of 60 MPa, elongation of 480%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 8

An ink of Example 8 was obtained by using 20 parts by mass of the pigment dispersion liquid, 30 parts by mass of the propylene glycol, 5.3 parts by mass of the urethane resin "SUPERFLEX 470" (manufactured by DKS Co. Ltd., tensile strength of 40 MPa, elongation of 640%) as a first resin, 2.7 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 9

An ink of Example 9 was obtained by using 20 parts by mass of the pigment dispersion liquid, 30 parts by mass of the propylene glycol, 2.9 parts by mass of the urethane resin "SUPERFLEX 470" (manufactured by DKS Co. Ltd., tensile strength of 40 MPa, elongation of 640%) as a first resin, 5.1 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 10

An ink of Example 10 was obtained by using 20 parts by mass of the pigment dispersion liquid, 30 parts by mass of the propylene glycol, 3 parts by mass of the urethane resin "SUPERFLEX 470" (manufactured by DKS Co. Ltd., tensile strength of 40 MPa, elongation of 640%) as a first resin, 3 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 11

An ink of Example 11 was obtained by using 20 parts by mass of the pigment dispersion liquid, 30 parts by mass of the propylene glycol, 4.5 parts by mass of the urethane resin "SUPERFLEX 470" (manufactured by DKS Co. Ltd., tensile strength of 40 MPa, elongation of 640%) as a first resin, 4.5 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 12

An ink of Example 12 was obtained by using 20 parts by mass of the pigment dispersion liquid, 30 parts by mass of the propylene glycol, 2.5 parts by mass of the urethane resin "SUPERFLEX 470" (manufactured by DKS Co. Ltd., tensile strength of 40 MPa, elongation of 640%) as a first resin, 2.5 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Example 13

An ink of Example 13 was obtained by using 20 parts by mass of the pigment dispersion liquid, 30 parts by mass of the propylene glycol, 5 parts by mass of the urethane resin "SUPERFLEX 470" (manufactured by DKS Co. Ltd., tensile strength of 40 MPa, elongation of 640%) as a first resin, 5 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Comparative Example 1

An ink of Comparative Example 1 was obtained by using 20 parts by mass of the pigment dispersion liquid, 30 parts by mass of the propylene glycol, 4 parts by mass of urethane resin "TAKELAC W-6355" (manufactured by Mitsui Chemicals, Inc., tensile strength of 35 MPa, elongation of 450%) as a first resin, 4 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Comparative Example 2

An ink of Comparative Example 2 was obtained by using 20 parts by mass of the pigment dispersion liquid, 30 parts by mass of the propylene glycol, 4 parts by mass of urethane resin "SUPERFLEX 460S" (manufactured by DKS Co. Ltd., tensile strength of 30 MPa, elongation of 790%) as a first resin, 4 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Comparative Example 3

An ink of Comparative Example 3 was obtained by using20 parts by mass of the pigment dispersion liquid, 30 parts by mass of the propylene glycol, 4 parts by mass of urethane resin "SUPERFLEX E-4800" (manufactured by DKS Co. Ltd., tensile strength of 19 MPa, elongation of 720%) as a first resin, 4 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Comparative Example 4

An ink of Comparative Example 4 was obtained by using 20 parts by mass of the pigment dispersion liquid, 30 parts by mass of the propylene glycol, 4 parts by mass of urethane resin "TAKELAC WS-5000" (manufactured by Mitsui Chemicals, Inc., tensile strength of 50 MPa, elongation of 500%) as a first resin, 4 parts by mass of the urethane resin "ETERNACOLL UW-1527DF" (manufactured by UBE Corporation, tensile strength of 90 MPa, elongation of 270%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Comparative Example 5

An ink of Comparative Example 5 was obtained by using 20 parts by mass of the pigment dispersion liquid, 30 parts by mass of the propylene glycol, 4 parts by mass of the urethane resin "SUPERFLEX 470" (manufactured by DKS Co. Ltd., tensile strength of 40 MPa, elongation of 640%) as a first resin, 4 parts by mass of urethane resin "TAKELAC WPB-341" (manufactured by Mitsui Chemicals, Inc., tensile strength of 60 MPa, elongation of 50%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Comparative Example 6

An ink of Comparative Example 6 was obtained by using 20 parts by mass of the pigment dispersion liquid, 30 parts by mass of the propylene glycol, 4 parts by mass of the urethane resin "SUPERFLEX 470" (manufactured by DKS Co. Ltd., tensile strength of 40 MPa, elongation of 640%) as a first resin, 4 parts by mass of urethane resin "TAKELAC WS-5984" (manufactured by Mitsui Chemicals, Inc., tensile strength of 55 MPa, elongation of 600%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

### Comparative Example 7

An ink of Comparative Example 7 was obtained by using 20 parts by mass of the pigment dispersion liquid, 30 parts by mass of the propylene glycol, 4 parts by mass of the urethane resin "SUPERFLEX 470" (manufactured by DKS Co. Ltd., tensile strength of 40 MPa, elongation of 640%) as a first resin, 4 parts by mass of the urethane resin "TAKELAC WS-5000" (manufactured by Mitsui Chemicals, Inc., tensile strength of 50 MPa, elongation of 500%) as a second resin, 0.5 parts by mass of the nonionic surfactant ("Surfynol^{®} 420" manufactured by Nissin Chemical Industry Co., Ltd., Component: glycol compound having an acetylene group), and 3 parts by mass of the ion-exchanged water in the same manner as Example 1.

Compositions of the thus-obtained ink compositions of Examples and Comparative Examples are summarized in Table 1.

**Table 1**

| | Pigment solution liquid | Organic solvent | First resin | | | | | | | Second resin | | | | | | Surfactant | Ion Exchange water | total | Resin ratio |
|---|---|---|---|---|---|---|---|---|---|---|---|---|---|---|---|---|---|---|---|
| | | Propylene grycol | AP-10 | SF 460 | SF4 70 | W-6 355 | SF4 60s | E-48 00 | WS-500 0 | UW-1527 DF | W-6110 | WPB -341 | WS-5984 | WS-5000 | W-6020 | | | | Second resin amount/first resin amount |
| Example 1 | 20 | 30 | 4 | | | | | | | 4 | | | | | | 0.5 | 41.5 | 100 | 1 |
| Example 2 | 20 | 30 | | 4 | | | | | | 4 | | | | | | 0.5 | 41.5 | 100 | 1 |
| Example 3 | 20 | 30 | | | 4 | | | | | 4 | | | | | | 0.5 | 41.5 | 100 | 1 |
| Example 4 | 20 | 30 | | | 4 | | | | | | 4 | | | | | 0.5 | 41.5 | 100 | 1 |
| Example 5 | 20 | 30 | | | 5 | | | | | 3 | | | | | | 0.5 | 41.5 | 100 | 0.6 |
| Example 6 | 20 | 30 | | | 3 | | | | | 5 | | | | | | 0.5 | 41.5 | 100 | 1.7 |
| Example 7 | 20 | 30 | | | 4 | | | | | | | | | | 4 | 0.5 | 41.5 | 100 | 1 |
| Example 8 | 20 | 30 | | 5.3 | | | | | | 2.7 | | | | | | 0.5 | 41.5 | 100 | 0.5 |
| Example 9 | 20 | 30 | | 2.9 | | | | | | 5.1 | | | | | | 0.5 | 41.5 | 100 | 1.8 |
| Example 10 | 20 | 30 | | | 3 | | | | | 3 | | | | | | 0.5 | 43.5 | 100 | 1 |
| Example 11 | 20 | 30 | | | 4.5 | | | | | 4.5 | | | | | | 0.5 | 40.5 | 100 | 1 |
| Example 12 | 20 | 30 | | | 2.5 | | | | | 2.5 | | | | | | 0.5 | 44.5 | 100 | 1 |
| Example 13 | 20 | 30 | | | 5 | | | | | 5 | | | | | | 0.5 | 39.5 | 100 | 1 |
| Comparative Example 1 | 20 | 30 | | | | 4 | | | | 4 | | | | | | 0.5 | 41.5 | 100 | 1 |
| Comparative Example 2 | 20 | 30 | | | | | 4 | | | 4 | | | | | | 0.5 | 41.5 | 100 | 1 |
| Comparative Example 3 | 20 | 30 | | | | | | 4 | | 4 | | | | | | 0.5 | 41.5 | 100 | 1 |
| Comparative Example 4 | 20 | 30 | | | | | | | 4 | 4 | | | | | | 0.5 | 41.5 | 100 | 1 |
| Comparative Example 5 | 20 | 30 | | | 4 | | | | | | | 4 | | | | 0.5 | 41.5 | 100 | 1 |
| Comparative Example 6 | 20 | 30 | | | 4 | | | | | | | | 4 | | | 0.5 | 41.5 | 100 | 1 |
| Comparative Example 7 | 20 | 30 | | | 4 | | | | | | | | | 4 | | 0.5 | 41.5 | 100 | 1 |

### Measurement of Tensile Strength and Elongation

A tensile strength and an elongation of each resin used in Examples and Comparative Examples were measured in the following manner.

First, each of the resins was applied over a PET film so as to have a dried film thickness of 500 µm, was then dried at 25 °C and 50%RH for twelve hours. Subsequently, after being dried for twenty minutes at 150°C, the resin was peeled off the sheet, whereby a resin film was prepared.

Thereafter, an elongation of the obtained resin film was measured using a tensile tester at a measurement temperature of 20°C and a measurement speed of 200 mm/min. In the measurement of the elongation, the resin film was stretched, a length to which the resin film was elongated at break was measured, and a ratio thereof was expressed in percentage as the elongation.

Further, the tensile strength of the resin was obtained by measuring a tensile strength of the resin at break.

In this evaluation, Product name "Tensilon Universal Material Testing Instrument RTC-1210A" manufactured by Orientec Co., Ltd. and the like was used as the tensile tester.

Tensile strengths and elongations of the respective resins used as the resin are summarized in Table 2.

**Table 2**

| | Resin | | | | | | | | | | | | |
|---|---|---|---|---|---|---|---|---|---|---|---|---|---|
| | First resin | | | | | | | Second resin | | | | | |
| | AP-10 | SF460 | SF470 | W-6355 | SF 460s | E-4800 | WS-5000 | UW-1527 DF | W-6110 | WPB-341 | WS-5984 | WS-5000 | W-6020 |
| Tensile strength (MPa) | 36 | 25 | 40 | 35 | 30 | 19 | 50 | 90 | 55 | 60 | 55 | 50 | 60 |
| Elongation (%) | 520 | 750 | 640 | 450 | 790 | 720 | 500 | 270 | 550 | 50 | 600 | 500 | 480 |

### Evaluation Test

The following evaluation tests were conducted using the ink compositions obtained in Examples and Comparative Examples.

### Evaluation of Texture

The evaluation test was performed using an image forming device (an inkjet recording device mounted with a linehead manufactured by KYOCERA Document Solutions Inc.) as an evaluation device under an environment of 25°C and 50%RH. Polyester Tropical 120 g/m² (manufactured by Toray Industries, Inc.) was used as a recorded medium.

A solid image of 28 cm × 3 cm was formed by discharging 35 pL (per pixel) of ink from a recording head onto a recorded medium. Thereafter, the printed evaluation image was dried at 160°C for three minutes.

The fabric and the printed image were folded in half, and a height of the fabric when folded in a direction perpendicular to a longitudinal direction was measured/recorded, and a texture was evaluated on the basis of the following criteria as values for evaluation.

### Evaluation Criteria:

Good: folded height smaller than 26 mm
Fair: folded height of 26 mm to 27 mm
Poor: folded height of 28 mm or larger

### Evaluation of Fastness to Rubbing

The evaluation test was performed using the image forming device (inkjet recording device mounted with a linehead manufactured by KYOCERA Document Solutions Inc.) as the evaluation device under the environment of 25°C and 50%RH. The Polyester Tropical 120 g/m² (manufactured by Toray Industries, Inc.) was used as a recorded medium.

A solid image of 28 cm × 3 cm was formed by discharging 35 pL (per pixel) of ink from the recording head onto a recorded medium. Thereafter, the printed evaluation image was dried at 160°C for three minutes.

Thereafter, the printed matter was evaluated with a dry test and wet test according to Rubbing Tester type II (Gakushin type) method specified in JIS L-0849:2013 (Color fastness to rubbing test method).

A cotton cloth (Kanakin No.3) was used as a rubbed cloth and a Rubbing Tester (Product name: RT-200 manufactured by DAIEI KAGAKU SEIKI MFG. Co., Ltd.) was used for rubbing. After the rubbing, three points having high color transfer densities were specified by sight in a color transfer portion of the cotton cloth, and colors thereof were measured using a colorimeter [Product name: Portable reflection densitometer RD-19 (manufactured by Gretagmacbeth LLC)]. A degree of color transfer, i.e., the fastness to rubbing was evaluated on the basis of an average value of optical density (cyan). In this test, a specimen was judged as being practically usable in a case of evaluation as C or higher in the fastness to dry rubbing and evaluation as E or higher in the fastness to wet rubbing.

### Evaluation Criteria:

A: optical density (cyan) of color transfer to the cotton cloth after rubbing less than 0.15
B: optical density (cyan) of color transfer to the cotton cloth after rubbing of 0.15 or higher and less than 0.20
C: optical density (cyan) of color transfer to the cotton cloth after rubbing of 0.20 or higher and less than 0.25
D: optical density (cyan) of color transfer to the cotton cloth after rubbing of 0.25 or higher and less than 0.30
E: optical density (cyan) of color transfer to the cotton cloth after rubbing of 0.30 or higher and less than 0.35
F: optical density (cyan) of color transfer to the cotton cloth after rubbing of 0.35 or higher

Results of the evaluation tests are summarized in Table 3.

**Table 3**

| Examples, Comparative Examples | Texture | Fastness to dry rubbing | Fastness to wet rubbing |
|---|---|---|---|
| Example 1 | Good | B | E |
| Example 2 | Good | C | E |
| Example 3 | Good | A | C |
| Example 4 | Good | C | E |
| Example 5 | Good | B | E |
| Example 6 | Fair | A | D |
| Example 7 | Good | B | E |
| Example 8 | Good | C | E |
| Example 9 | Fair | C | E |
| Example 10 | Good | A | D |
| Example 11 | Good | A | D |
| Example 12 | Good | B | E |
| Example 13 | Fair | A | D |
| Comparative Example 1 | Fair | C | F |
| Comparative Example 2 | Fair | C | F |
| Comparative Example 3 | Good | D | F |
| Comparative Example 4 | Poor | B | D |
| Comparative Example 5 | Good | D | E |
| Comparative Example 6 | Good | D | E |
| Comparative Example 7 | Good | D | E |

### Observations

The results of Table 3 show that the use of an ink composition of the present disclosure makes it possible to obtain a textile printed matter having a good texture and an excellent fastness to rubbing. In particular, a comparison between Examples 5-6 and Examples 8-9 shows that the ink composition was more excellent in the fastness to dry rubbing in a case where a ratio of second resin/first resin was 0.6 or higher. Further, it can be seen that the ink composition was more excellent in the fastness to dry rubbing in a case where the resin ratio was 1.7 or lower.

Further, a comparison between Examples 10-11 and Examples 12-13 shows that the ink composition was more excellent in the fastness to dry rubbing in a case where the content of the resins was 6 mass% or more with respect to the entire amount of the ink composition. Additionally, it can be seen that the ink composition was more excellent in texture in a case where the content of the resins was 9 mass% or less with respect to the entire amount of the ink composition.

On the other hand, ink compositions did not satisfy the acceptable level in at least one of the evaluation tests on the texture, the fastness to dry rubbing, and the fastness to wet rubbing in a case of the use of the ink compositions of Comparative Examples 1 to 7 which had at least one of the first resin and the second resin contained in the resin failing to meet a requirement of the present invention.

## Claims

1. An ink composition for textile printing, comprising a resin; a pigment; an aqueous medium; and an organic solvent,
wherein the resin includes:
a first resin having an elongation of 500% or more and 750% or less and a tensile strength of 25 MPa or more and 40 MPa or less; and
a second resin having an elongation of 250% or more and 550% or less and a tensile strength of 55 MPa or more and 90 MPa or less.

2. The ink composition for textile printing according to claim 1,
wherein a weight ratio (the second resin / the first resin) of the second resin to the first resin is from 0.6 to 1.7.

3. The ink composition for textile printing according to claim 1 or 2,
wherein the tensile strength of the second resin is 60 MPa or more and 90 MPa or less.

4. The ink composition for textile printing according to any one of claims 1 to 3,
wherein the first resin and the second resin are polyurethane resins.

5. The ink composition for textile printing according to any one of claims 1 to 4,
wherein a content of the resin is 6 mass% or more and 9 mass% or less with respect to the entire amount of the ink composition.

6. The ink composition for textile printing according to any one of claims 1 to 5, which is used for inkjet textile printing.
